Europäisches Patentamt

European Patent Office

Office européen des brevets

(11) Veröffentlichungsnummer: **0 260 430 B1**

(12) **EUROPÄISCHE PATENTSCHRIFT**

(45) Veröffentlichungstag der Patentschrift: **29.07.92**

(21) Anmeldenummer: **87111398.1**

(22) Anmeldetag: **06.08.87**

(51) Int. Cl.⁵: **C08G  18/28**, C09K 3/00,
//C10M115/08

Die Akte enthält technische Angaben, die nach
dem Eingang der Anmeldung eingereicht wurden
und die nicht in dieser Patentschrift enthalten sind.

(54) **Verdickungsmittel.**

(30) Priorität: **05.09.86 DE 3630319**

(43) Veröffentlichungstag der Anmeldung:
**23.03.88 Patentblatt  88/12**

(45) Bekanntmachung des Hinweises auf die
Patenterteilung:
**29.07.92 Patentblatt  92/31**

(84) Benannte Vertragsstaaten:
**AT BE CH DE ES FR GB GR IT LI LU NL SE**

(56) Entgegenhaltungen:
**DE-A- 1 444 243**
**DE-A- 2 054 885**
**FR-A- 1 157 828**

**CHEMICAL ABSTRACTS, Band 98, Nr. 4, Januar 1983, Seite 34, Zusammenfassung Nr. 17541y, Columbus, Ohio, US; & JP-A-57 119 807 (MITSUBISHI PETROCHEMICAL CO., LTD) 26-07-1982**

(73) Patentinhaber: **Akzo N.V.**
**Postbus 186 Velperweg 76**
**NL-6800 LS Arnhem(NL)**

(72) Erfinder: **Van de Berg, Albert, Dr.**
**Eynattener Strasse 24d**
**W-5100 Aachen(DE)**
Erfinder: **Philippsen, Elke, Dr.**
**Scheppgraben 9**
**W-5160 Düren(DE)**
Erfinder: **Bruil, Henk, Dr.**
**Irenelaan 41**
**NL-6713 Ede(NL)**

(74) Vertreter: **Pfeiffer, Ernst et al**
**Akzo NV Akzo Patents Department P.O. Box 9300**
**NL-6800 SB Arnhem(NL)**

EP 0 260 430 B1

**Beschreibung**

Die Erfindung betrifft Verdickungsmittel, insbesondere flüssige Verdickungsmittel, welche durch Alkoxilierung von Alkoholen mit einem Gemisch von Äthylenoxid und Propylenoxid sowie weitere Umsetzung des erhaltenen Polyäthers mit Diisocyanaten erhalten worden sind, sowie deren Verwendung als Verdickungsmittel in wäßrigen Systemen.

In der EP-OS 31 777 werden Polyoxyalkylenglykol-Blockpolymere beschrieben, die durch Umsetzung von Polyglykolen mit einem stöchiometrischen Unterschuß von Polyisocyanaten, insbesondere aromatischen Diisocyanaten in entsprechende hochmolekulare Polyurethane mit endständigen OH-Gruppen überführt werden. Diese Polyurethane können als Verdickungsmittel, insbesondere für wäßrige Systeme eingesetzt werden.

Ein wesentlicher Nachteil dieser wasserlöslichen Polyurethanverdicker ist ihre geringe Verdickereffektivität, so daß man um bestimmte Viskositäten einstellen zu können, größere Mengen dieser Polyurethane einsetzen muß, was zu einer Kostenerhöhung bei der Verdickung führt.

Bei den in der EP.OS 31 777 beschriebenen Polyurethane handelt es sich im übrigen um hochviskose Substanzen, die nicht mehr pumpbar sind und damit schwieriger zu verarbeiten und zu dosieren sind.

Ein weiterer Nachteil dieser hochmolekularen Polyurethane besteht darin, daß sie eine verhältnismäßig geringe Schwerstabilität aufweisen. Gerade bei vielen technischen Anwendungen, z.B. in Hydraulikflüssigkeiten werden Verdicker verlangt, die eine große Scherstabilität aufweisen. Auch ist die Herstellung dieser Polyurethane mit Problemen verbunden, da ihre Eigenschaften in großem Maße vom Polymerisationsgrad und einer ganzen Reihe von weiteren Faktoren abhängen. So spielt bei der Herstellung dieser Polyurethane die Diisocyanatreaktivität, die OH-Zahl, die Reinheit der eingesetzten Produkte, der verwendete Katalysator und sonstige Verfahrensparameter wie Temperatur u.dgl. eine große Rolle, so daß die Reproduzierbarkeit bei der Synthese der Polyurethane nur schwierig zu gewährleisten ist.

In der DE-OS 1 444 243 werden Umsetzungsprodukte von aromatischen, hydroaromatischen oder aliphatischen Mono- oder Polyisocyanaten mit hochmolekularen Oxalkylierungsprodukten von mindestens 8 Kohlenstoffatome enthaltenen Verbindungen, die lediglich ein einziges gegenüber Alkylenoxiden reaktionsfähiges Wasserstoffatom besitzen, beschrieben. Als Isocyanate werden u.a. Verbindungen wie Äthylisocyanat, Stearylisocyanat, Toluylendiisocyanat, Hexamethylendiisocyanat oder 4,4'-Triisocyanatotriphenylmethanangegeben. Bei den Oxalkylierungsprodukten handelt es sich um Anlagerungsprodukte, auf der Basis von einwertigen Alkoholen, Carbonsäure Phenolen, Mercaptanen oder sekundären Monoaminen, an die entweder Äthylenoxid oder Propylenoxid angelagert ist.

Die dort beschriebenen Produkte werden als Hilfsmittel beim Färben bzw. Drucken von Textilmaterialien verwendet.

Im wesentlichen gleiche Produkte werden in der DE-OS 2 054 885 als Mittel für Pigmentdruckpasten empfohlen.

Die in der DE-OS 1 444 243 bzw. 2 054 885 beschriebenen Synthesen führen jedoch zu Pastenförmigen bzw. festen Produkten mit den damit zusammenhängenden Nachteilen, z.B. beim Einsatz als Verdickungsmittel. Sie sind nicht pumpbar und können daher meistens nicht mit Additiven wie Solubilisatoren und Co-Verdickern direkt vermischt werden. Ihre Einarbeitbarkeit in wäßrige Systeme läßt zu wünschen übrig. Auch ist bei der Herstellung derartigen Urethane meist die Verwendung eines Katalysators erforderlich, so daß Verdickungsmittel erhalten werden, die in irgendeiner Form den unerwünschten Katalysator noch enthalten, der vielfach nicht oder nur unter größten Schwierigkeiten entfernt werden kann.

In der FR-A-1 157 828 wird ein Verfahren zur Herstellung von Produkten mit einem hohen Molekulargewicht durch Umsetzung von Polyisocyanaten mit alkoxylierten Monoalkoholen beschrieben. Diese Produkte besitzen, wie auf Seite 1 Spalte 2 Absatz 2, Zeile 13 nachzulesen ist, eine makromolekulare Struktur.

Obwohl bereits eine ganze Reihe von Verdickungsmitteln bekannt sind, besteht noch ein Bedürfnis nach Verdickungsmitteln mit verbesserten Eigenschaften sowie nach vorteilhaften Herstellungsverfahren, insbesondere nach Verdickungsmitteln, die flüssig sind und sich problemlos in wäßrigen Systemen verarbeiten lassen.

Aufgabe der Erfindung ist es deshalb, Verdickungsmittel bzw. Verdickungsmittelmischungen zur Verfügung zu stellen, die zur Verdickung von wäßrigen Systemen besonders geeignet sind, universell verwendbar sind, sich schnell und vollständig bei Raumtemperatur oder leicht erhöhter Temperatur einarbeiten lassen und mit denen es möglich ist, reproduzierbar gewünschte Viskositäten in Lösungen und Dispersionen einzustellen.

Aufgabe der Erfindung ist es ferner Verdickungsmittel zur Verfügung zu stellen, die gegenüber Temperatur bzw. Konzentrationsschwankungen relativ unempfindlich sind, d.h. zu einer Viskosität führen, die bei Temperatur- bzw. Konzentrationsänderungen wenig schwankt.

2

Aufgabe der Erfindung ist es ferner, Verdickungsmittel zur Verfügung zu stellen, die eine hohe Effektivität besitzen, scherstabil sind, sich einfach handhaben lassen, d.h. insbesondere flüssig und niedrigviskos sind,so daß sie leicht pumpbar und dosierbar sind.

Aufgabe der Erfindung ist es ferner, ein Verfahren zur Verfügung zu stellen, mit dem derartige Verdickungsmittel einfach und wirtschaftlich und in reproduzierbarer Weise herstellbar sind.

Aufgabe der Erfindung ist es weiter, Verdickungsmittel zur Verfügung zu stellen, die insbesondere in Mischung miteinander zu Gemischen mit steuerbarem Eigenschaftsprofil führen.

Diese Aufgabe wird gelöst durch flüssige Verdickungsmittel auf der Basis von Diurethanen, die erhalten worden sind durch Reaktion eines Polyethers und eines Diisocyanats in einem molaren Verhältnis von 1 : 0,7 bis 1 : 0,25, wobei der Polyether das Produkt einer unter Druck und in Gegenwart von 0,2 bis 0,5 Gewichts-% Katalysator, bezogen auf den eingesetzten Alkohol, durchgeführten Alkoxilierung eines einwertigen Alkohols mit 8 bis 30 Kohlenstoffatomen mit 20 - 200 Mol einer Alkylenoxidmischung aus Ethylenoxid und Propylenoxid pro Mol des eingesetzten Alkohols ist und wobei das molare Verhältnis von Ethylenoxid zu Propylenoxid in der Alkylenoxidmischung im Bereich von 30 : 70 bis 90 : 10 liegt.

Vorzugsweise werden Alkohole mit 10 bis 20 insbesondere mit 12 bis 18 Kohlenstoffatomen verwendet. Es ist vorteilhaft, wenn man pro Mol Alkohol 60 bis 120 Mol Alkylenoxid ensetzt. Vorteilhafterweise wird ein molares Verhältnis Äthylenoxid zu Propylenoxid von 50 : 50 bis 90 : 10, vorzugsweise von 70 : 30 bis 85 : 15 insbesondere von 80 : 20 bis 85 : 15 verwendet.

Als Diisocyanat ist Hexamethylendiisocyanat besonders geeignet.

Sehr zweckmäßig ist die Verwendung von Talgalkohol und Laurylalkohol als Alkohole im Rahmen der Erfindung, wobei Gemische von Alkoholen insbesondere Gemische von Lauryl- und Talgalkohol bevorzugt sind.

Gegenstand der Erfindung sind ferner flüssige Verdickungsmittel, erhältlich nach einem Verfahren gemäß einem der Ansprüche 1 bis 12.

Die flüssigen Verdickungsmittel gemäß der Erfindung sind besonders geeignet zum Verdicken von wäßrigen Systemen, wobei vorteilhafterweise ein vorzugsweise oberflächenaktiver Solubilisator verwendet wird. Als Solubilisator sind Alkoholalkoxilate, insbesondere Alkoholäthoxilate besonders geeignet.

In einer vorteilhaften Ausführungsform der Erfindung werden Gemische der Verdickungsmittel verwendet.

Die Herstellung der als Zwischenprodukt benötigten alkoxilierten Alkohole geschieht nach an sich bekannten Verfahren. So wird ein Alkohol, wie z.B. Talgalkohol mit einem Gemisch von Äthylenoxid und Propylenoxid alkoxiliert; dabei werden im allgemeinen höhere Temperaturen z.B. von 140 bis 180°C angewandt und ein entsprechender Katalysator, vorzugsweise basischer Natur, z.B. KOH oder $CH_3ONa$ eingesetzt. Es ist zweckmäßig die Alkoxilierung unter Druck, z.B. bei 3 bis 5 bar durchzuführen.

Das Molekulargewicht des alkoxilierten Alkohols kann in verhältnismäßig weiten Grenzen variiert werden. Es ist günstig, wenn man das Molekulargewicht auf etwa 2.500 bis 5.000 einstellt.

Neben den bevorzugt eingesetzten Alkoholen Talgalkohol und Laurylalkohol, wobei diese beiden Alkohole vorzugsweise in einer Mischung eingesetzt werden, können im Rahmen der Erfindung weitere Alkohole verwendet werden und zwar sowohl native als auch synthetische Alkohole. So können die bei technischen Synthesen anfallenden $C_8$ bis $C_{30}$ Alkoholschnitte vorzugsweise die $C_{10}$ bis $C_{20}$ Alkoholschnitte, Oxo- und Guerbetalkohole eingesetzt werden. Weitere Alkohole seien beispielsweise genannt, wie Myristyl, Stearylalkohol usw.

Neben den bereits erwähnten beiden Katalysatoren können auch basische Verbindungen wie KOH oder Alkoholate wie $KOCH_3$ aber auch Lewis Säuren wie $BF_3$ eingesetzt werden.

Die Menge des eingesetzten Katalysators liegt im allgemeinen bei 0,2 bis 0,5 Gew.-%, bezogen auf den eingesetzten Alkohol.

Der erhaltene Polyäther wird anschließend nach an sich bekannten Verfahren mit etwa 50 bis 200 ppm Benzoylchlorid, bezogen auf den Polyäther neutralisiert (s. W. Foerst, Ullmanns Encyclopädie der techn. Chemie, Bd. 14, Seite 341, Verlag Urban • Schwarzenberg, München 1963). Anschließend wird, nachdem man den Katalysator entfernt hat, mit einem Diisocyanat umgesetzt. Die Reaktionstemperatur beträgt im allgemeinen 60 bis 100°C, bevorzugt wird die Reaktion bei etwa 80°C durchgeführt.

Das Verhältnis OH-Verbindung zu Diisocyanat beträgt im allgemeinen 1 : 0,7 bis 1 : 0,25, vorzugsweise beträgt das Verhältnis von OH-Verbindung zu Diisocyanat etwa 1 : 0,55, d.h. auf ein Mol Polyäther wird 10% mehr als ein halbes Mol Diisocyanat eingesetzt.

Neben dem vorstehend erwähnten Hexamethylendiisocyanat, das bevorzugt ist und zu geruchlosen und farblosen Produkten führt, können auch andere aliphatische, cycloaliphatische und aromatische Diisocyanate eingesetzt werden, wobei Toluylendiisocyanat und Diphenylmethandiisocyanat besonders geeignet sind.

Besonders vorteilhaft lassen sich die auf diese Weise erhaltenen Diurethane als Verdickungsmittel in wäßrigen Systemen einsetzen. Als wäßrige Systeme seien hier insbesondere genannt wäßrige Tenside, wäßrige alkoholische Systeme, insbesondere Äthylenglykol/Wassergemische, Säuren wie Phosphorsäure, Zitronensäure, wäßrige Elektrolytlösungen, Polyacrylatdispersionen u.dgl.

In vielen Fällen ist es zweckmäßig, einen Solubilisator mit zu verwenden, der besonders wirkungsvoll in Form eines Verdickerpremixes zum Einsatz gelangt. Unter Verdickerpremix versteht man ein Gemisch des eigentlichen Verdickungsmittels und des Solubilisators, das, bevor man es in die zu verdickende Lösung oder Dispersion gibt, eigens hergestellt wird. Diese Premixe können auf Vorrat hergestellt werden und sind besonders lagerstabil.

Durch Einsatz von Verdickerpremixes wird die Einarbeitbarkeit des Verdickers in die Formulierung vereinfacht, d.h. man kann den Verdickerpremix schnell und vor allem bei Raumtemperatur einarbeiten. Die Einarbeitbarkeit von hocheffektiven Diurethanverdickern, die im allgemeinen höhere Temperaturen und längere Rührzeiten erfordert, wird durch dieses Verfahren vereinfacht und somit wirtschaftlicher.

In vielen Fällen ist es vorteilhaft, wenn der Solubilisator nichtionischer Natur ist, insbesondere wenn der Solubilisator und das Verdickungsmittel getrennt in die Formulierung eingearbeitet werden sollen.

Werden zunächst Premixes hergestellt, so sind neben den bevorzugt eingesetzten nichtionischen Solubilisatoren auch anionische Solubilisatoren sehr geeignet.

Die Verwendung von Solubilisatoren empfiehlt sich besonders dann, wenn wäßrige Systeme verdickt werden sollen, die kein Tensid enthalten.

Besonders vorteilhaft im Rahmen der Erfindung sind Verdickungsmittel, welche aus Mischungen von mindestens zwei Diurethanen bestehen.

Auf diese Weise ist es möglich, Verdickersysteme mit ganz bestimmtem Eigenschaftsprofil herzustellen, mit dem man den vielfältigsten Anforderungen der Technik entsprechen kann.

Die Herstellung von derartigen Mischungen ist einmal möglich, indem man bereits bei der Synthese von zwei verschiedenen Alkoholen insbesondere von Lauryl- und Talgalkohol ausgeht und diese beiden Alkohole entweder getrennt oder gemeinsam mit einem Gemisch von Äthylenoxid und Propylenoxid alkoxiliert; dieses Gemisch wird sodann mit dem Diisocyanat zur Reaktion gebracht.

Bevorzugt aber werden die Mischungen hergestellt, indem man aus zwei oder mehreren Diurethanen gemäß vorliegender Erfindung ein Gemisch herstellt. Auf diese Weise ist man besonders flexibel und kann durch einfaches Mischen in verschiedenen Konzentrationsverhältnissen praktisch beliebig viele Verdickersysteme gewinnen.

So ist es möglich, auf einfache Weise Verdickersysteme in die Hand zu bekommen, die einfach handhabbar sind, z.B. niedrigviskos und pumpbar eingestellt werden können und die je nach Mischungszusammensetzung die gewünschten anwendungstechnischen Eigenschaften aufweisen, z.B. bei Raumtemperatur einarbeitbar sind, eine hohe Verdickereffektivität aufweisen, Reproduzierbarkeit der gewünschten Viskositäten besitzen, die eine Viskositätsstabilität der Formulierungen innerhalb eines bestimmten Temperaturbereichs gewährleisten, die unempfindlich sind gegenüber Konzentrationsschwankungen usw.

Die erfindungsgemäßen Verdickungsmittel lassen sich ohne weiteres mit weiteren üblichen Zusätzen verarbeiten, und zwar sowohl als Premix, als auch allein oder in Mischungen.

Die erfindungsgemäßen Diurethane sind in weiten pH-Bereichen beständig. Es sind farblose, klare, bei Raumtemperatur flüssige Verbindungen, die eingearbeitet in wäßrige Systeme von pH 1 bis 10 hydrolysestabil sind.

Die Erfindung wird durch folgende Beispiele näher erläutert:

Beispiel 1A und 1B

Herstellung der erfindungsgemäßen Verdickungsmittel.

Die in den Beispielen 1A und 1B eingesetzten Mengen und sonstigen Spezifikationen sind der Tabelle 1 zu entnehmen. Zunächst wird der Alkohol im flüssigen Zustand im Autoklaven mit 0,3 Gew.-% KOH versetzt und 60 Min bei 70 - 120°C und 10 - 20 Torr entwässert. Anschließend wird durch Einleiten von Stickstoff das Vakuum aufgehoben und die entsprechende Menge eines Äthylenoxid/Propylenoxid-Gemisches bei 150°C und 3 - 5 bar portionsweise zudosiert.

Nach beendeter Zugabe und nach Reaktion wird das Produkt abgekühlt.

Anschließend wird das flüssige Alkoholalkoxilat in einem Dreihalskolben mit Rührer und Rückflußkühler überführt und kurz auf etwa 10 bis 20 Torr evakuiert. Sodann wird das Vakuum durch Einleiten von Stickstoff aufgehoben, 100 ppm Benzoylchlorid zugegeben und gerührt. Anschließend wird bei 80°C das Diisocyanat zudosiert und zwar innerhalb von 10 Min. Nach einer Nachreaktion von 2 h bei 100°C wird das Produkt abgekühlt auf 40°C, abgefüllt und analysiert.

4

Tabelle 1: Versuchs- und Produktangaben zweier ausgewählter Diurethan-Verdicker

$$R_1 (EO, PO)_{a/b} \; Y (EO, PO)_{c/d} \; R_2$$

| Reaktionsprodukt | A | B |
|---|---|---|
| Alkohole - $R_1$, $R_2$ | Talg | Lauryl |
| (g) | 261 | 197 |
| Katalysator (g, KOH) | 0,8 | 0,8 |
| EO, PO (Verhältnis a/b, c/d) | 66/14 | 66/14 |
| (g) | 3721 | 3721 |
| Alkoxilat: | | |
| Molgewicht | 3980 | 3920 |
| Viskosität (cSt/20°C) | 1140 | 1090 |
| Pour Point (°C) | 9 | 9 |
| Cloud Point (°C) (1% in Wasser) | 79 | 80 |
| Diisocyanat Y | HMDI | HMDI |
| (g) | 96,7 | 96,7 |
| Alkohol/Diisocyanat | 1 : 0,55 | 1 : 0,55 |
| Benzoylchlorid (ml) | 0,4 | 0,4 |
| Diurethan: | | |
| Molgewicht | 8.130 | 8010 |
| Viskosität (cSt/20°C) | 7800 | 7600 |
| (cSt/40°C) | 2750 | 2700 |
| Pour Point (°C) | 10 | 10 |

Talg-Alkohol:      Alkohol-Gemisch $C_{16}$-$C_{18}$
Lauryl-Alkohol:    Alkohol-Gemisch $C_{12}$-$C_{14}$
HMDI:              Hexamethylendiisocyanat

## Beispiel 2

Aus jeweils 90 Teilen des flüssigen Verdickungsmittels A und des flüssigen Verdickungsmittels B sowie 10 Teilen Wasser wird unter kurzem Rühren eine klare viskose und pumpbare Lösung hergestellt. Die Lösung ist beliebig lang lagerbar und zeigt keine Tendenzen zum Entmischen.

Die Lösungen können mit Solubilisatoren oder Co-Verdickungsmitteln zu Premixen verschnitten werden. Die Premixe sind ebenfalls unbegrenzt lagerbar und können im Bedarfsfall ohne weitere Behandlung direkt eingesetzt werden.

## Beispiel 3

Aus den Diurethanen A und B gemäß Beispiel 1A und 1B werden verschiedene verdickte wäßrige Systeme durch einfaches Einarbeiten der Diurethane hergestellt.

Die Viskosität der Lösungen wurde im Ubbelohde-Viskosimeter bei Temperaturen von 20°C und 38°C bestimmt. Die Ergebnisse sowie weitere Angaben sind in Tabelle 2 zusammengestellt.

Bei den Beispielen IV handelt es sich um Dispersionen; hier wurde die Viskosität mit dem Brookfield-Viskosimeter bestimmt. Die Viskositäten sind dort in mPa.s angegeben.

Tabelle 2: Verdickung wäßriger Systeme mit den Verdickungsmitteln A und B

| Beispiele | zu verdickende Lösung | Konzentration der Lösung | Verdickungsmittel/ Solubilisator | Konzentration Verdickungsmittel/Solubilisator | Viskosität in cSt 20°C | 38°C |
|---|---|---|---|---|---|---|
| I-1-a | Salzsäure | 10% | A/C | 2% / 2% | 233 | - |
| 1-b | | | A/D | 2% / 2% | 1666 | - |
| 2-a | Phosphorsäure | 10% | A/E | 2% / 2% | 1920 | - |
| 3-a | Zitronensäure | 5% | A/F | 2% / 1% | 517 | - |
| | | | A/F | 3% / 1% | 10487 | - |
| | | | B/F | 5% / 1% | 587 | - |
| | | | B/F | 5% / 2% | 652 | - |
| II-a | Ethylenglykol | 47% | A/C | 3% / 3% | 292 | - |
| -b | | | B/- | 6% / - | 429 | 142 |
| -c | | | B/E | 4% / 2% | - | 76 |
| III-1-a | Lialalkohol-*5 ethoxylat (- 7 EO -) | 5% | A/- | 2% / - | 4701 | - |
| 1-b | | 10% | A/- | 2% / - | 2627 | - |
| 1-c | | | B/- | 5% / - | 1703 | - |
| 1-d | | 14% | A/- | 2% / - | 2572 | - |
| 1-e | | | B/- | 5% / - | 1315 | - |
| 2-a | Lialalkohol-*5 ethoxylat (- 12 EO -)*1 | 5% | A/- | 3% / - | 17513 | - |
| 2-b | | 14% | A/- | 3% / - | 2652 | - |
| 3-a | Ethersulfat | 5% | A/- | 3% / - | 2630 | - |
| 3-b | | 14% | A/- | 3% / - | 275 | - |
| 3-c | | | B/- | 5% / - | 1375 | - |
| 4-a | quaternäres Ammoniumsalz *2 | 25% | A/- | 2% / - | 601 | - |
| 5-a | quaternäres Ammoniumsalz *3 | 0,5% | A/- | 3% / - | 1690 | - |
| 5-b | | 2,5% | A/- | 2% / - | 393*4 | - |
| IV-a | Polyacrylat-Dispersion | - | A/- | 0,01% / - | 104*4 | - |
| -b | | - | A/- | 0,1% / - | 13000*4 | - |
| -c | | - | B/- | 0,1% / - | 830*4 | - |
| -d | | - | B/- | 0,3% / - | 400000*4 | - |

Ergänzung zur Tabelle 2:

Solubilisator:

C    Talgalkoholethoxilat, 60 EO    (Akzo Chemie: ELFAPUR T 600)

D    Trimethyltalgammoniumchlorid    (Akzo Chemie: ARQUAD T 50)

E    Nonylphenolethoxilat, 12 EO    (Akzo Chemie: ELFAPUR N 120)

F    Didecyldimethylammoniumchlorid    (Akzo Chemie: ARQUAD 2-10/50)

Anmerkungen:

*1    Natrium $C_{12}/C_{15}$-Fettalkohol äther(2,5)-sulfat    (Akzo Chemie: ELFAN NS 252)

*2    Didecyldimethylammoniumchlorid    (Akzo Chemie: ARQUAD 2-10/50)

*3    Dimethyllaurylbenzylammonium-chlorid    (Akzo Chemie: ARQUAD DMMCB-50)

*4    Brookfield-Viskosimeter    dynamische Viskosität in mPa.s

*5    Lialalkohol = Oxoalkohol mit $C_{12}-C_{13}$

Beispiel 4

Mischungen von Verdickungsmitteln, verarbeitet nach den in Beispiel 2 beschriebenen Methoden, ermöglichen die Steuerung eines Anforderungsprofils der zu verdickenden Lösung.

Es soll an zwei Diagrammen gezeigt werden, wie die beiden Verdickungsmittel A und B, deren Verdickungswirkung in Tabelle 2 aufgeführt wurde, zusammenwirken.

Das erste System, das hier näher beschrieben wird, besteht aus 5%-iger Zitronensäurelösung, die mit 1% Didecyldimethylammoniumchlorid versetzt und mit einer Mischung von A und B angedickt wird. Wird das Verhältnis A : B = 1 : 2 mit einer Gesamtaktivität von 3% gewählt, so ergibt sich eine Viskosität von 260 cSt bei 20°C (3-I). Bei 30°C (3-I) sinkt die Viskosität auf 90 cSt ab (eine Reduktion um 65%).

Ausgehend von diesem Referenzsystem (3-I), wird die Menge an B um 1% erhöht, Beispiel 3-II zeigt, daß einerseits die Viskosität nur um ca. 20% zunimmt, aber andererseits die Toleranz des Gesamtsystems gegenüber Temperaturerhöhung verbessert wird (eine Reduktion um 39%).

Wird die Menge an A um 1% angehoben (Beispiel 3-III), so nimmt die Viskosität stark zu, das Temperaturprofil hingegen bleibt unverändert.

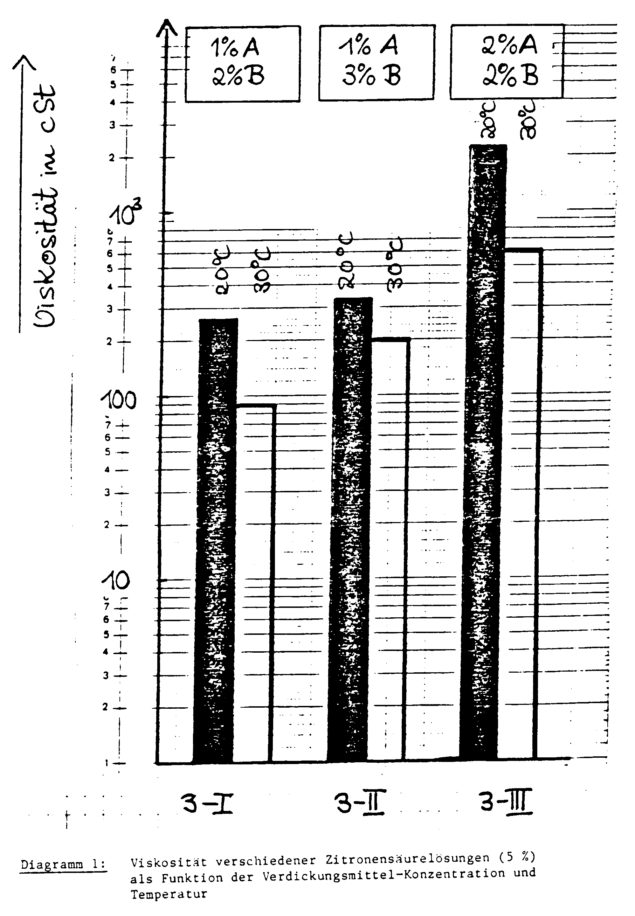

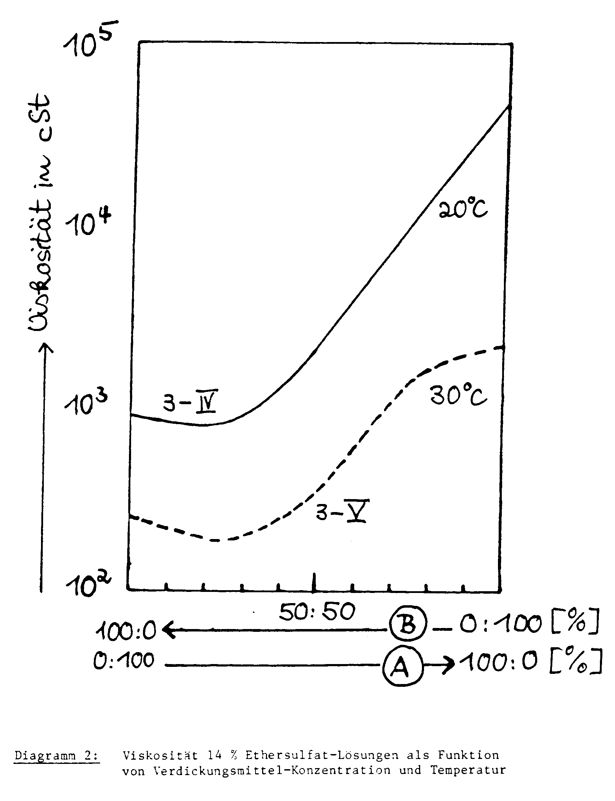

Der Einfluß des Verdickers B auf das Viskositäts-Temperatur-Profil, der in Diagramm 1 herausgearbeitet ist, wird in Diagramm 2 bestätigt. Aufgetragen ist hier die kinematische Viskosität, gemessen in cSt als Funktion verschiedener Mischungsverhältnisse von A und B. Das verdickte Tensid ist ein Ethersulfat (14 %).

Die Toleranz eines mit B gemischten Verdickungsmittels A gegenüber der Temperatur geht einher mit einer Toleranz gegenüber der Zusammensetzung der Mischung: Bei hohem B-Anteil ist die Viskosität über einen breiten Mischungsbereich unabhängig vom Mischungsverhältnis. Beispiel 3-IV zeigt, daß die Empfindlichkeit gegenüber Konzentrationsschwankungen mit zunehmendem Anteil des verhältnismäßig effektiveren Verdickungsmittels A größer wird.

Beide Diagramme zeigen, daß eine Kombination zweier Verdicker, in diesem Falle A und B, die Einstellung der Viskosität und der Toleranz des verdickten Systems ermöglicht.

**Patentansprüche**

1. Flüssiges Verdickungsmittel auf der Basis von Diurethanen, dadurch gekennzeichnet, dass diese erhalten worden sind durch Reaktion eines Polyethers und eines Diisocyanats in einem molaren Verhältnis von 1 : 0,7 bis 1 : 0,25, wobei der Polyether das Produkt einer unter Druck und in Gegenwart von 0,2 bis 0,5 Gewichts-% Katalysator bezogen auf den eingesetzten Alkohol durchgeführten Alkoxilierung eines einwertigen Alkohols mit 8 bis 30 Kohlenstoffatomen mit 20 - 200 Mol einer Alkylenoxidmischung aus Ethylenoxid und Propylenoxid pro Mol des eingesetzten Alkohols ist und wobei das molare Verhältnis von Ethylenoxid zu Propylenoxid in der Alkylenoxidmischung im Bereich von 30 : 70 bis 90 : 10 liegt.

2. Verdickungsmittel nach Anspruch 1, dadurch gekennzeichnet, dass die Alkoxilierung bei einem Druck von 3 bis 5 bar durchgeführt wurde.

3. Verdickungsmittel nach einem der Ansprüche 1 bis 2, dadurch gekennzeichnet, dass der verwendete Alkohol 12 bis 18 Kohlenstoffatome aufweist.

4. Verdickungsmittel nach einem der Ansprüche 1 bis 3, dadurch gekennzeichnet, dass man 60 bis 120 Mol Alkylenoxid pro Mol Alkohol verwendet.

5. Verdickungsmittel nach einem der Ansprüche 1 bis 4, dadurch gekennzeichnet, dass das molare Verhältnis von Ethylenoxid zu Propylenoxid im Bereich von 50 : 50 bis 90 : 10 liegt.

6. Verdickungsmittel nach Anspruch 5, dadurch gekennzeichnet, dass der Bereich 70 : 30 bis 85 : 15 ist.

7. Verdickungsmittel nach einem der Ansprüche 1 bis 6, dadurch gekennzeichnet, dass man als Diisocyanat Hexamethylendiisocyanat verwendet.

8. Verdickungsmittel nach einem der Ansprüche 1 bis 7, dadurch gekennzeichnet, dass man als Alkohol Talgalkohol verwendet.

9. Verdickungsmittel nach einem der Ansprüche 1 bis 7, dadurch gekennzeichnet, dass man als Alkohol Laurylalkohol verwendet.

10. Verfahren zum Verdicken eines wässrigen Systems, indem man dem System ein flüssiges Verdik-

kungsmittel zufügt, dadurch gekennzeichnet, dass man als flüssiges Verdickungsmittel ein Diurethan verwendet, das erhalten wird durch Reaktion eines Polyethers und eines Diisocyanats in einem molaren Verhältnis von 1 : 0,7 bis 1 : 0,25, wobei der Polyether das Produkt einer unter Druck und in Gegenwart von 0,2 bis 0,5 Gewichts-% Katalysator durchgeführten Alkoxilierung eines einwertigen Alkohols mit 8 bis 30 Kohlenstoffatomen mit 20 - 200 Mol einer Alkylenoxidmischung aus Ethylenoxid und Propylenoxid pro Mol des eingesetzten Alkohols ist und wobei das molare Verhältnis von Ethylenoxid zu Propylenoxid in der Alkylenoxidmischung im Bereich von 30 : 70 bis 90 : 10 liegt.

11. Verfahren nach Anspruch 10, dadurch gekennzeichnet, dass man als flüssiges Verdickungsmittel ein Gemisch aus flüssigen Verdickungsmitteln zufügt.

12. Verfahren nach Anspruch 11, dadurch gekennzeichnet, dass man dem wässrigen System einen Solubilisator zufügt.

13. Verfahren nach Anspruch 12, wobei man dem System als Solubilisator ein Alkoholalkoxilat zufügt.

## Claims

1. A diurethane-based liquid thickening agent, characterised in that the diurethanes are obtained by reacting a polyether and a diisocyanate in a molar ratio of 1 : 0.7 to 1 : 0.25, wherein the polyether is the product of an alkoxylation, which is carried out under pressure and in the presence of from 0.2 to 0.5 % by weight of catalyst in relation to the alcohol used, of a monovalent alcohol having 8 to 30 carbon atoms with 20 - 200 mole of an alkylene oxide mixture of ethylene oxide and propylene oxide per mole of the alcohol used, and wherein the molar ratio of ethylene oxide to propylene oxide in the alkylene oxide mixture is in the range of from 30 : 70 to 90 : 10.

2. A thickening agent according to Claim 1, characterised in that the alkoxylation was carried out at a pressure of from 3 to 5 bar.

3. A thickening agent according to Claim 1 or Claim 2, characterised in that the alcohol used has 12 to 18 carbon atoms.

4. A thickening agent according to any one of Claims 1 to 3, characterised in that 60 to 120 mole of alkylene oxide per mole of alcohol are used.

5. A thickening agent according to any one of Claims 1 to 4, characterised in that the molar ratio of ethylene oxide to propylene oxide is in the range of from 50 : 50 to 90 : 10.

6. A thickening agent according to Claim 5, characterised in that the range is 70 : 30 to 85 : 15.

7. A thickening agent according to any one of Claims 1 to 6, characterised in that the diisocyanate used is hexamethylene diisocyanate.

8. A thickening agent according to any one of Claims 1 to 7, characterised in that the alcohol used is tallow alcohol.

9. A thickening agent according to any one of Claims 1 to 7, characterised in that the alcohol used is lauryl alcohol.

10. A method of thickening an aqueous system, by adding a liquid thickening agent to the system, characterised in that as the liquid thickening agent a diurethane is used which is obtained by reacting a polyether and a diisocyanate in a molar ratio of from 1 : 0.7 to 1 : 0.25, wherein the polyether is the product of an alkoxylation, which is carried out under pressure and in the presence of from 0.2 to 0.5 % by weight of catalyst, of a monovalent alcohol having 8 to 30 carbon atoms with 20 - 200 mole of an alkylene oxide mixture of ethylene oxide and propylene oxide per mole of the alcohol used, and wherein the molar ratio of ethylene oxide to propylene oxide in the alkylene oxide mixture is in the range of from 30 : 70 to 90 : 10.

**11.** A method according to Claim 10, characterised in that a mixture of liquid thickening agents is added as the liquid thickening agent.

**12.** A method according to Claim 11, characterised in that a solubiliser is added to the aqueous sytem.

**13.** A method according to Claim 12, wherein as the solubiliser an alcohol alkoxylate is added to the system.

## Revendications

**1.** Composé épaississant fluide à base de diuréthanes, caractérisé en ce que ceux-ci sont obtenus par la réaction d'un polyéther et d'un diisocyanate selon un rapport molaire 1/0,7 à 1/0,25; ledit polyéther étant le produit d'une alkoxylation, sous pression et en présence de 0,2 à 0,5% en poids de catalyseur par rapport à l'alcool présent, d'un alcool monovalent ayant de 8 à 30 atomes de carbone avec de 20 à 200 moles d'un mélange d'oxyde(s) d'alkylène, constitué d'oxyde d'éthylène et d'oxyde de propylène, par mole d'alcool présent; le rapport molaire oxyde d'éthylène/oxyde de propylène dans le mélange d'oxydes d'alkylène étant compris entre 30/70 et 90/10.

**2.** Composé épaississant selon la revendication 1, caractérisé en ce que l'alkoxylation est mise en oeuvre sous une pression de 3 à 5 bars.

**3.** Composé épaississant selon l'une quelconque des revendications 1 ou 2, caractérisé en ce que l'alcool utilisé contient de 12 à 18 atomes de carbone.

**4.** Composé épaississant selon l'une quelconque des revendications 1 à 3, caractérisé en ce que l'on utilise de 60 à 120 moles d'oxydes d'alkylène par mole d'alcool.

**5.** Composé épaississant selon l'une quelconque des revendications 1 à 4, caractérisé en ce que le rapport molaire oxyde d'éthylène/oxyde de propylène est compris entre 50/50 et 90/10.

**6.** Composé épaississant selon la revendication 5, caractérisé en ce que le rapport est compris entre 70/30 et 85/15.

**7.** Composé épaississant selon l'une quelconque des revendications 1 à 6, caractérisé en ce qu'on utilise, en tant que diisocyanate, de l'hexaméthylène diisocyanate.

**8.** Composé épaississant selon l'une quelconque des revendications 1 à 7, caractérisé en ce qu'on utilise, en tant qu'alcool, de l'alcool dont la chaîne carbonée est celle de la suie.

**9.** Composé épaississant selon l'une quelconque des revendications 1 à 7, caractérisé en ce qu'on utilise, en tant qu'alcool, du laurylalcool.

**10.** Procédé pour épaissir un système aqueux, dans lequel on ajoute un composé épaississant fluide, caractérisé en ce qu'on utilise, en tant que composé épaississant fluide, un diuréthane qui est obtenu par la réaction d'un polyéther et d'un diisocyanate selon un rapport molaire 1/0,7 à 1/0,25; ledit polyéther étant le produit d'une alkoxylation, sous pression et en présence de 0,2 à 0,5% en poids de catalyseur par rapport à l'alcool présent, d'un alcool monovalent ayant de 8 à 30 atomes de carbone avec de 20 à 200 moles d'un mélange d'oxyde(s) d'alkylène, constitué d'oxyde d'éthylène et d'oxyde de propylène, par mole d'alcool présent; le rapport molaire oxyde d'éthylène/oxyde de propylène dans le mélange d'oxydes d'alkylène étant compris entre 30/70 et 90/10.

**11.** Procédé selon la revendication 10, caractérisé en ce qu'on ajoute, en tant que composé épaississant fluide, un mélange de composés épaississants fluides.

**12.** Procédé selon la revendication 11, caractérisé en ce qu'on ajoute un solubilisant au système aqueux.

**13.** Procédé selon la revendication 12, dans lequel on ajoute au système aqueux un alkoxylat d'alcool en tant que solubilisant.

Diagramm 1:   Viskosität verschiedener Zitronensäurelösungen (5 %)
als Funktion der Verdickungsmittel-Konzentration und
Temperatur

Diagramm 2: Viskosität 14 % Ethersulfat-Lösungen als Funktion von Verdickungsmittel-Konzentration und Temperatur